# EUROPEAN PATENT SPECIFICATION

(11) **EP 2 990 949 B1**
(45) Date of publication and mention of the grant of the patent: **02.08.2017**
(21) Application number: 15182779.7
(22) Date of filing: 27.08.2015
(51) Int. Cl.: G06F 11/14, G06F 17/30

(54) **METHODS AND DEVICES FOR BACKING UP FILE**
VERFAHREN UND VORRICHTUNGEN ZUM SICHERN EINER DATEI
PROCÉDÉS ET DISPOSITIFS POUR SAUVEGARDER UN FICHIER

(30) Priority: 27.08.2014 CN 201410429701
(43) Date of publication of application: 02.03.2016
(73) Proprietor: Xiaomi Inc., Beijing 100085 (CN)
(72) Inventor: LI, Chunyu, 100085 Haidian District (CN); WANG, Yidong, 100085 Haidian District (CN); HU, Xiandong, 100085 Haidian District (CN)
(74) Representative: Reeve, Nicholas Edward

(56) References cited:
- CN-A- 103 561 100
- US-A1- 2014 181 034
- US-B1- 7 797 323
- US-B1- 8 082 231

## Description

### TECHNICAL FIELD

The present disclosure generally relates to the field of storage, and more particularly, to methods and devices for backing up a file.

### BACKGROUND

With the widespread usage and popularity of mobile devices, the demand for automatic backup of files keeps rising. However, since local storage spaces in mobile devices are often inadequate, it is desirable to automatically back up files from local mobile devices to devices with adequate storage spaces, such as local servers or intelligent routers.

However, in practice, files in different file paths are often actually the same file. In this case, in attempt to automatically back up the local file from the mobile device to the local server or the intelligent router, the same file may be repeatedly backed up.

US patent no. US 8,082,231 discloses a server that performs backup of data, such as a file. Hash values may be used in detecting differences between data sets.

US patent no. US 7,797,323 discloses a method of identifying duplicate or similar files.

### SUMMARY OF THE INVENTION

Aspects of the present invention are defined by the independent claims below to which reference should now be made. Preferred features are defined by the dependent claims.

The advantageous effects provided the embodiments of the present disclosure include the following.

In the above embodiments of the present disclosure, a hash value is determined for the file through a preset algorithm, and the hash value is inquired for in a local back-up database. If it is found out that the hash value has been recorded in the local back-up database, it is cancelled of backing up the file to the back-up server, thereby it may be avoided of repeatedly backing up the same file of different file paths.

In the above embodiments of the present disclosure, in determining the hash value of the file through the preset algorithm, the file is applied with a thresholding process. If the size of the file is larger than a preset threshold, several file fragments are extracted from the file, and a hash value is determined with respect to the several file fragments, as the hash value of the file. In this way, calculation workload in determining the hash value of the file may be effectively reduced if the size of the file is too large, and thus the power consumption of the device may be reduced.

In the above embodiments of the present disclosure, by extracting evenly distributed file fragments each having a size less than a preset threshold from the file, a hash value determined with respect to the file fragments and a hash value determined with respect to the file may be as consistent as possible, in addition that the calculation workload in determining a hash value is reduced.

In the above embodiments of the present disclosure, if the hash value is not searched out in the local back-up database, by uploading the file corresponding to the hash value to the back-up server and saving the hash value to the local back-up database, when the same file of different file paths is about to be backed up, the determined hash value may be searched out in the local back-up database, thereby it may be avoided of repeatedly backing up the same file of different file paths.

In the above embodiments of the present disclosure, after the file corresponding to the hash value is successfully uploaded to the back-up server, the hash value is marked as uploaded in the local back-up database. In this way, whether the file has been uploaded may be learned about by inquiring for the hash value in the local back-up database.

In the above embodiments of the present disclosure, before it is cancelled of backing up the file to the back-up server, it is inquired for whether the hash value has been marked as uploaded in the local back-up database. If it has been marked as uploaded, it is cancelled of backing up the file to the back-up server; and if it has not been marked as uploaded, it is further inquired with the back-up server for whether the file has been successfully uploaded. When it is determined that the file has been successfully uploaded, it is cancelled of backing up the file to the back-up server; and when it is determined that the file has not been successfully uploaded, the file is backed up to the back-up server. In this way, faulty operation due to unsuccessful upload of the file may be avoided.

In the above embodiments of the present disclosure, a property information such as a latest modification time and a size of the file is recorded in the local back-up database, and when the property information of the file is different from the property information recorded in local, the hash value and the property information of the file recorded in the local back-up database are updated. In this way, it may be avoided of a false judgment in backing up a file.

In the above embodiments of the present disclosure, by inquiring in the local back-up database for the hash value carried in the inquiring request received from the terminal, and informing the terminal that the file corresponding to the hash value has been successfully uploaded if the hash value has been recorded in the local back-up database, it may be avoided of a faulty operation of the terminal caused by unsuccessful upload of the file, that is, repeatedly backing up the same file of different file paths to the back-up server.

In the above embodiments of the present disclosure, the hash value of the uploaded file by the terminal is determined through the preset algorithm, and after the file is successfully backed up in local, the determined hash value is saved in the local back-up database. In this way, when the back-up server searches out the hash value in the local back-up database for another time, the corresponding terminal may be informed that the file corresponding to the hash value has been uploaded.

In the above embodiments of the present disclosure, in determining the hash value of the file through the preset algorithm, the file is applied with a thresholding process. If the size of the file is larger than a preset threshold, several file fragments are extracted from the file, and a hash value is determined with respect to the several file fragments, as the hash value of the file. In this way, calculation workload in determining the hash value of the file may be effectively reduced if the size of the file is too large, and thus the power consumption of the device may be reduced.

In the above embodiments of the present disclosure, by extracting evenly distributed file fragments each having a size less than a preset threshold from the file, a hash value determined with respect to the file fragments and a hash value determined with respect to the file may be as consistent as possible, in addition that the calculation workload in determining a hash value is reduced.

It is to be understood that both the foregoing general description and the following detailed description are exemplary and explanatory only and do so not limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart of a method for backing up a file, according to an exemplary embodiment;
Fig. 2 is a flow chart of another method for backing up a file, according to an exemplary embodiment;
Fig. 3 is a flow chart of another method for backing up a file, according to an exemplary embodiment;
Fig. 4 is a schematic diagram of extracting file fragments from a video file, according to an exemplary embodiment;
Fig. 5 is a block diagram of a device for backing up a file, according to an exemplary embodiment;
Fig. 6 is a block diagram of a device for backing up a file, according to an exemplary embodiment;
Fig. 7 is a block diagram of a device for backing up a file, according to an exemplary embodiment;
Fig. 8 is a block diagram of a device for backing up a file, according to an exemplary embodiment;
Fig. 9 is a block diagram of a device for backing up a file, according to an exemplary embodiment;
Fig. 10 is a block diagram of a device for backing up a file, according to an exemplary embodiment;
Fig. 11 is a block diagram of a device for backing up a file, according to an exemplary embodiment;
Fig. 12 is a block diagram of a device for backing up a file, according to an exemplary embodiment;
Fig. 13 is a block diagram of a device for backing up a file, according to an exemplary embodiment;
Fig. 14 is a block diagram of a device for backing up a file, according to an exemplary embodiment;
Fig. 15 is a block diagram of a device for backing up a file, according to an exemplary embodiment;
Fig. 16 is a block diagram of a configuration of a device for backing up a file, according to an exemplary embodiment; and
Fig. 17 is another block diagram of a configuration of a device for backing up a file, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

Terminology used in the present disclosure is merely for the purpose of describing particular embodiments, and not intended to limit the present disclosure. As used in the present disclosure and the appended claims, "an", "said" and "the" in singular forms are intended to include plural forms, unless the context definitely indicates otherwise. It should also be understood that the term "and/or" used herein means and includes any or all possible combinations of one or more of the associated listed items.

It should be understood that, although the terms "first", "second", "third", etc., are used in the present disclosure to describe a variety of information, but the information should not be limited by these terms. These terms are merely used to distinguish information of one type. For example, without departing from the scope of the present disclosure, a first information may also be referred to as a second information. Similarly, the second information may also be referred to as the first information. Depending on the context, as used herein, the word "if" may be interpreted as "where ......" or "when ......" or "in response to ".

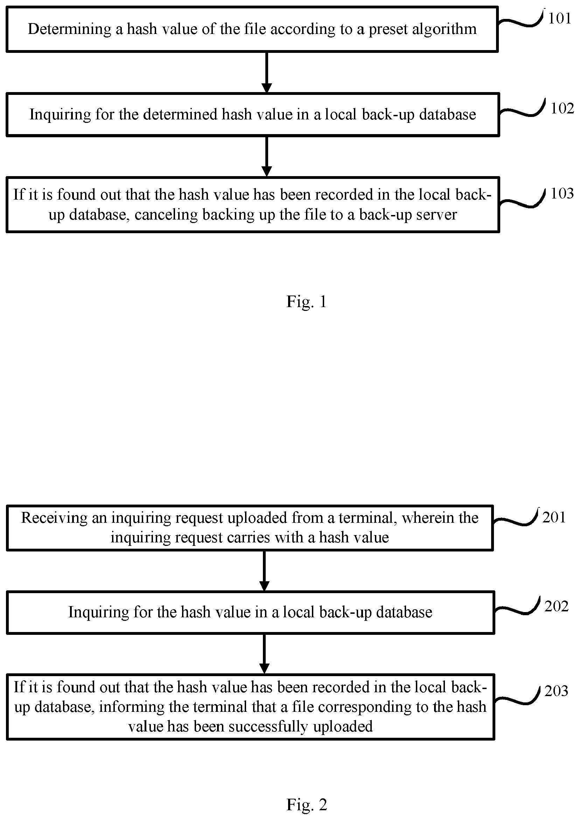

Fig. 1 is a flow chart of a method for backing up a file, according to an exemplary embodiment. As shown in Fig. 1, the method, which is applied in a terminal, includes the following steps.

In step 101, a hash value of the file is determined according to a preset algorithm.

In the present embodiment, the preset algorithm may be that, the file is applied with a thresholding process before the hash value is determined, and then different methods for determining a hash value may be adopted depending on the result of the thresholding process.

For example, it may be firstly judged whether a size of the file is larger than a preset threshold. If the size of the file is not larger than the preset threshold, the hash value is directly determined with respect to the file; and if the size of the file is larger than the preset threshold, directly calculating the hash value of the file may cause a rather huge calculation workload, which may in turn cause increase in power consumption of the device. Accordingly, for a file larger than the preset threshold, several file fragments each having a preset size may be extracted from the file, and a hash value is determined with respect to the several file fragments, as the hash value of the file. For example, in extracting the file fragments from the file, the file may be divided into several file blocks each having the preset size, and then some file blocks are selected as the file fragments from all of the file blocks resulted from the dividing.

The preset size is less than the preset threshold, and the preset threshold may be set according to practical conditions, or may take an empirical value, which the present disclosure does not limit. For example, to back up a video or picture file through the method of the present disclosure, the preset threshold may take an empirical value of 4MB.

The file fragments may be extracted from the file either randomly or evenly. The randomly extracted file fragments may be distributed unevenly in the file. In this case, if a hash value is determined with respect to the file fragments unevenly distributed in the file, an error may occur between the determined hash value and the hash value determined with respect to the file. Accordingly, in order to make a hash value determined with respect to the file fragments and a hash value determined with respect to the file to be as consistent as possible, the file fragments may be evenly extracted from the file. For example, the file fragments may be extracted at a fixed interval, so that the extracted file fragments may be evenly distributed in the file.

In addition, it should be noted that, for extracting file fragments from the file, an amount of the file fragments extracted from the file may neither be too large nor too small. If the amount of the extracted file fragments is too large, the algorithm may be frequently called in determining the hash value, to unnecessarily occupy system resources; and if the amount of the extracted file fragments is too small, the accuracy of the determined hash value may be reduced. Accordingly, in practical application, the amount of the extracted file fragments may be properly set by those skilled in the art in considering both of the factors, or may take an empirical value, which the present disclosure does not limit.

Through the solution, calculation workload of determining the hash value of the file may be effectively reduced, and power consumption of the device may be reduced.

In step 102, the determined hash value is inquired for in a local back-up database.

In the present embodiment, if it is found out that the hash value has not been recorded in the local back-up database, the file corresponding to the hash value is backed up to a back-up server, and after the file corresponding to the hash value is backed up to the back-up server, the determined hash value is saved in the local back-up database.

In step 103, if it is found out that the hash value has been recorded in the local back-up database, it is cancelled of backing up the file to a back-up server.

In the present embodiment, if it is found out that the hash value has been recorded in the local back-up database, which means that the file has been uploaded to the back-up server, so the file will not be backed up to the back-up server any more, so as to avoid repeatedly backing up the same file.

When the file is uploaded to the back-up server, in order to prevent a faulty operation caused by failure in the upload, after the file corresponding to the hash value is successfully uploaded to the back-up server, the hash value is marked as uploaded in the local back-up database. When the hash value is found in the local back-up database, before it is cancelled of backing up the file corresponding to the hash value to a back-up server, it may be further determined whether the file has been successfully uploaded by inquiring for whether the hash value has been marked as uploaded in the local back-up database. If the hash value has been marked as uploaded, which means that the file corresponding to the hash value has been successfully uploaded, it is cancelled of backing up the file to a back-up server any more. Instead, if the hash value has not been marked as uploaded, which means that there is a possibility that the file has not been successfully uploaded, it may be inquired with the back-up server for whether the file has been successfully uploaded. If the back-up server informs that the file corresponding to the hash value has been successfully uploaded, it is cancelled of backing up the file to the back-up server any more. Similarly, if the back-up server informs that the file corresponding to the hash value has not been successfully uploaded, the file is backed up to the back-up server again.

It can be seen from the above embodiment that, the terminal determines the hash value of the file through the preset algorithm, and inquires for the determined hash value in the local back-up database, and if it is found out that the hash value has been recorded in the local back-up database, it is cancelled of backing up the file to a back-up server, thereby it may be avoided of repeatedly backing up the same file of different file paths.

Fig. 2 is a flow chart of another method for backing up a file, according to an exemplary embodiment. As shown in Fig. 2, the method, which is applied in a back-up server, includes the following steps.

In step 201, an inquiring request uploaded from a terminal is received, wherein the inquiring request carries with a hash value.

In step 202, the hash value is inquired for in a local back-up database.

In the present embodiment, after the back-up server receives the file uploaded by the terminal, a hash value of the file uploaded by the terminal is determined according to a preset algorithm; and after it backs up the file successfully in local, it informs the terminal. Meanwhile, the determined hash value is saved in the local back-up database for the terminal to inquire for.

The preset algorithm adopted by the back-up server is the same with that adopted by the terminal. Before the hash value is determined for the file, it may be judged whether a size of the file is larger than a preset threshold. If the size of the file is not larger than the preset threshold, the hash value is directly determined with respect to the file; and if the size of the file is larger than the preset threshold, directly calculating the hash value of the file may cause a rather huge calculation workload, which may in turn cause increase in power consumption of the device. Accordingly, for a file larger than the preset threshold, several file fragments each having a preset size may be extracted from the file, and a hash value is determined with respect to the several file fragments, as the hash value of the file. For example, in extracting the file fragments from the file, the file may be divided into several file blocks each having the preset size, and then some file blocks are selected as the file fragments from all of the file blocks resulted from the dividing.

The preset size is less than the preset threshold, and the preset threshold may be set according to practical conditions, or may take an empirical value, which the present disclosure does not limit. For example, to back up a video or picture file through the method of the present disclosure, the preset threshold may take an empirical value of 4MB.

The file fragments may be extracted from the file either randomly or evenly. The randomly extracted file fragments may be distributed unevenly in the file. In this case, if a hash value is determined with respect to the file fragments unevenly distributed in the file, an error may occur between the determined hash value and the hash value determined with respect to the file. Accordingly, in order to make a hash value determined with respect to the file fragments and a hash value determined with respect to the file to be as consistent as possible, the file fragments may be evenly extracted from the file. For example, the file fragments may be extracted at a fixed interval, so that the extracted file fragments may be evenly distributed in the file.

In addition, it should be noted that, for extracting file fragments from the file, an amount of the file fragments extracted from the file may neither be too large nor too small. If the amount of the extracted file fragments is too large, the algorithm may be frequently called in determining the hash value, to unnecessarily occupy system resources; and if the amount of the extracted file fragments is too small, the accuracy of the determined hash value may be reduced. Accordingly, in practical application, the amount of the extracted file fragments may be properly set by those skilled in the art in considering both of the factors, or may take an empirical value, which the present disclosure does not limit.

Through the solution, calculation workload of determining the hash value of the file may be effectively reduced, and power consumption of the device may be reduced.

In step 203, if it is found out that the hash value has been recorded in the local back-up database, the terminal is informed that a file corresponding to the hash value has been successfully uploaded.

In the present embodiment, if it is found out that the determined hash value has been recorded in the local back-up database, which means that the file inquired by the terminal this time has been previously successfully uploaded to the local, thus the back-up server may send a message to the terminal informing it that the file has been successfully uploaded, so that the terminal cancels backing up the file to the back-up server any more after it receives the message. Instead, if it is found out that the determined hash value has not been recorded in the local back-up database, the back-up server may further send a message to the terminal informing it that the file has not been successfully uploaded, so that the terminal backs up the file to the back-up server again after it receives the message.

It can be seen from the above embodiment that, the back-up server inquires for the hash value carried in the inquiring request received from the terminal in the local back-up database, and informs the terminal that the file corresponding to the hash value has been successfully uploaded if the hash value has been recorded in the local back-up database, thereby it may be avoided of a faulty operation of the terminal caused by unsuccessful upload of the file, that is, repeatedly backing up the same file of different file paths to the back-up server.

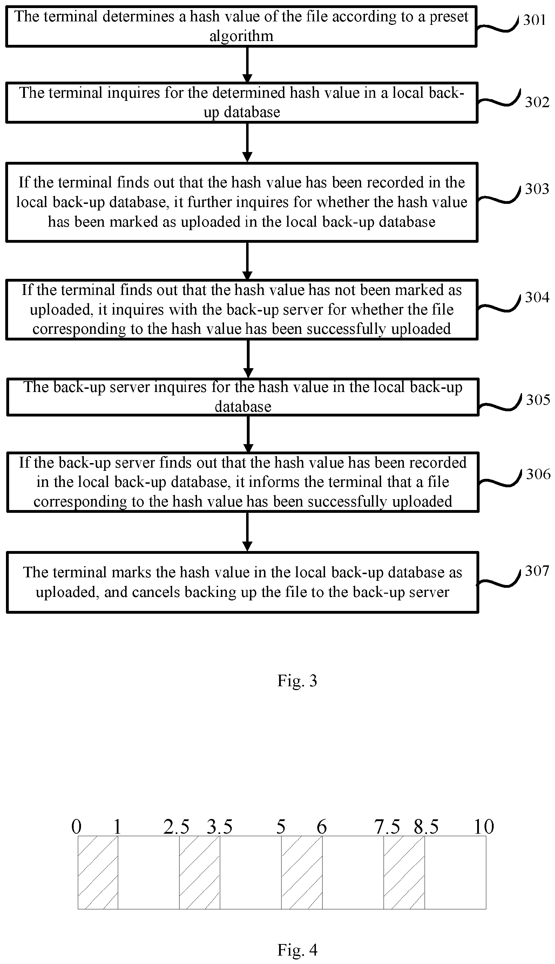

Fig. 3 is a flow chart of another method for backing up a file, according to an exemplary embodiment. As shown in Fig. 3, the method includes the following steps.

In step 301, the terminal determines a hash value of the file according to a preset algorithm.

In the present embodiment, the preset algorithm may be that, before the hash value of the file is determined, it may firstly be judged whether a size of the file is larger than a preset threshold. If the size of the file is not larger than the preset threshold, the hash value is directly determined with respect to the file; and if the size of the file is larger than the preset threshold, directly calculating the hash value of the file may cause a rather huge calculation workload, which may in turn cause increase in power consumption of the device. Accordingly, for a file larger than the preset threshold, several file fragments each having a preset size may be extracted from the file, and a hash value is determined with respect to the several file fragments, as the hash value of the file. For example, in extracting the file fragments from the file, the file may be divided into several file blocks each having the preset size, and then some file blocks are selected as the file fragments from all of the file blocks resulted from the dividing.

The preset size is less than the preset threshold, and the preset threshold may be set according to practical conditions, or may take an empirical value, which the present disclosure does not limit. For example, to back up a video or picture file through the method of the present disclosure, the preset threshold may take an empirical value of 4MB.

The file fragments may be extracted from the file either randomly or evenly. The randomly extracted file fragments may be distributed unevenly in the file. In this case, if a hash value is determined with respect to the file fragments unevenly distributed in the file, an error may occur between the determined hash value and the hash value determined with respect to the file. Accordingly, in order to make a hash value determined with respect to the file fragments and a hash value determined with respect to the file to be as consistent as possible, the file fragments may be evenly extracted from the file. For example, the file fragments may be extracted at a fixed interval, so that the extracted file fragments may be evenly distributed in the file.

In addition, it should be noted that, for extracting file fragments from the file, an amount of the file fragments extracted from the file may neither be too large nor too small. If the amount of the extracted file fragments is too large, the algorithm may be frequently called in determining the hash value, to unnecessarily occupy system resources; and if the amount of the extracted file fragments is too small, the accuracy of the determined hash value may be reduced. Accordingly, in practical application, the amount of the extracted file fragments may be properly set by those skilled in the art in considering both of the factors, or may take an empirical value, which the present disclosure does not limit.

For example, assuming that the terminal is about to back up a local video file having a size of 10M, and the preset threshold T takes an empirical value of 4MB, the size of the video file is larger than the preset threshold. In this case, 4 pieces of file fragments each having a preset size which takes another empirical value of 1MB may be extracted from the video file.

Further, the video file is firstly divided into 4 file blocks each of 2.5MB, and then a file fragment of 1MB is extracted from each file block. Moreover, in order to ensure that the file fragments are evenly distributed in the video file, a fixed interval may be set between file fragments. For example, file fragments may be extracted according to the following interval function:

### [KP, KP+1]

In the above interval function, P denotes a size of each file block, K takes a value from (0, 1, ..., T-1), and T denotes the preset threshold. In the present embodiment, P is 2.5, K takes a value from (0, 1, 2, 3). According to the above interval function, as shown in Fig. 4, four file fragments each having a size of 1MB may be extracted from the video file at a fixed interval of 1.5MB, which are [0, 1MB], [2.5MB, 3.5MB], [5MB, 6MB] and [7.5MB, 8.5MB], respectively.

Through the solution, calculation workload of determining the hash value of the file may be effectively reduced, and power consumption of the device may be reduced.

In step 302, the terminal inquires for the determined hash value in a local back-up database.

In the present embodiment, if it is found out that the hash value has not been recorded in the local back-up database, the file corresponding to the hash value is backed up to a back-up server, and after the file corresponding to the hash value is backed up to the back-up server, the determined hash value is saved in the local back-up database. Moreover, after the terminal learns about that the file corresponding to the hash value has been successfully uploaded to the back-up server, the hash value may be marked as uploaded in the local back-up database. The terminal may learn about that the file corresponding to the hash value has been successfully uploaded to the back-up server, by receiving an inform message sent from the back-up sever to the terminal after the file has been successfully uploaded to the back-up server.

In step 303, if the terminal finds out that the hash value has been recorded in the local back-up database, it further inquires for whether the hash value has been marked as uploaded in the local back-up database.

In step 304, if the terminal finds out that the hash value has not been marked as uploaded, it inquires with the back-up server for whether the file corresponding to the hash value has been successfully uploaded.

In the present embodiment, if the terminal finds out that the hash value has been marked as uploaded, it is cancelled of backing up the file to a back-up server. The terminal may inquire with the back-up server for whether the file corresponding to the hash value has been successfully uploaded by sending an inquire request which carries with the hash value to the back-up server.

In step 305, the back-up server inquires for the hash value in the local back-up database.

In the present embodiment, after the back-up server receives the file uploaded by the terminal, a hash value of the file uploaded by the terminal is firstly determined according to a preset algorithm; and after the file is successfully backed up in local, the determined hash value is saved in the local back-up database for the terminal to inquire for. Wherein the preset algorithm for determining the hash value of the file adopted by the back-up server is the same with that adopted by the terminal, which will not be repeated herein.

In step 306, if the back-up server finds out that the hash value has been recorded in the local back-up database, it informs the terminal that a file corresponding to the hash value has been successfully uploaded.

In the present embodiment, when the back-up server finds out that the hash value has been recorded in the local back-up database, it may send an inform message to the terminal.

In step 307, the terminal marks the hash value in the local back-up database as uploaded, and cancels backing up the file to the back-up server.

In the present embodiment, after the terminal learns about that the file corresponding to the hash value has been successfully uploaded by receiving the inform message sent from the back-up server, it marks the hash value as uploaded and cancels backing up the file to the back-up server. On the other hand, if the terminal finds out with the back-up server that the file corresponding to the hash value has not been successfully uploaded, it backs up the file to the back-up server, and after the file has been successfully backed up to the back-up server, it marks the hash value corresponding to the file with an uploaded mark in the local back-up database.

It can be seen from the above embodiment that, in the present disclosure, a hash value is determined for the file through a preset algorithm, and the determined hash value is inquired for in a local back-up database of the terminal. If it is found out that the hash value has been recorded in the local back-up database, it is cancelled of backing up the file to the back-up server, thereby it may be avoided of repeatedly backing up the same file of different file paths. Moreover, in the present disclosure, by improving conventional algorithm for determining a hash value, to extract several evenly distributed and small-sized file fragments from a target file, and determine a hash value with respect to the several file fragments, calculation workload in determining the hash value of the file may be effectively reduced, and thus power consumption of the device may be reduced.

In another optional embodiment of the present disclosure, based on the above embodiments shown in Fig. 1 or 3, property information of the file may be recorded in the local back-up database. For example, the property information may contain a latest modification time and a size of the file, etc. When the property information of the file is different from the property information recorded in the local back-up database, which means that the file has been modified or added new contents, the hash value of the file needs to be re-determined, the hash value of the file recorded in the local back-up database needs to be updated, and the property information of the file also needs to be updated. However, if the property information recorded in the local back-up database is the same with the actual property information of the file, the local back-up database does not need to be updated, and the saved values in the local back-up database may be directly used.

In the above embodiment, property information such as a latest modification time and a size of the file is recorded in the local back-up database, and when the property information of the file is different from the property information recorded in local, the hash value and the property information of the file recorded in the local back-up database are updated. In this way, it may be avoided of a false judgment in backing up the file.

Corresponding to the above embodiments of the method for backing up a file, embodiments of a device for backing up a file are provided in the present disclosure.

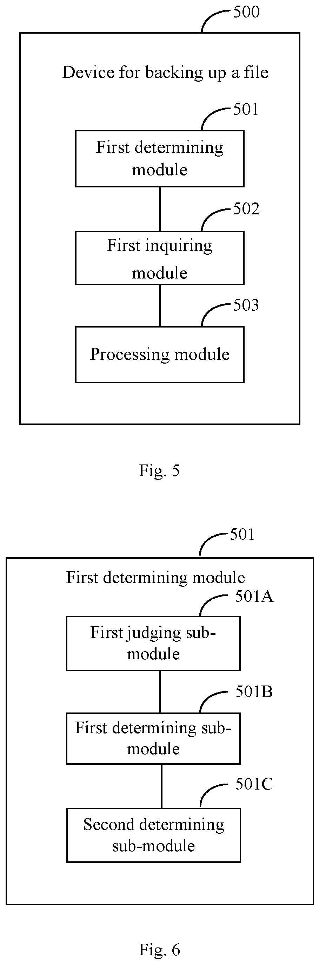

Fig. 5 is a block diagram of a device for backing up a file, according to an exemplary embodiment, which may be applied in a terminal.

As shown in Fig. 5, a device 500 for backing up a file according to an exemplary embodiment includes: a first determining module 501, a first inquiring module 502 and a processing module 503.
the first determining module 501 is configured to determine a hash value of the file according to a preset algorithm;
the first inquiring module 502 is configured to inquire for the determined hash value in a local back-up database; and
the processing module 503 is configured to, if it is found out that the hash value has been recorded in the local back-up database, cancel backing up the file to a back-up server.

In the above embodiment, the hash value of the file is determined through the preset algorithm, and the determined hash value is inquired for in the local back-up database, and if it is found out that the hash value has been recorded in the local back-up database, it is cancelled of backing up the file to a back-up server, thereby it may be avoided of repeatedly backing up the same file of different file paths.

Referring to Fig. 6, Fig. 6 is a block diagram of another device for backing up a file, according to an exemplary embodiment which is based on the above embodiment illustrated in Fig. 5. The first determining module 501 may include: a first judging sub-module 501A, a first determining sub-module 501B and a second determining sub-module 501C.

The first judging sub-module 501A is configured to judge whether a size of the file is larger than or equal to a preset threshold; the first determining sub-module 501 B is configured to, if it is judged that the size of the file is larger than or equal to the preset threshold, extract several file fragments from the file, and determine a hash value with respect to the several file fragments, as the hash value of the file; and the second determining sub-module 501C is configured to, if it is judged that the size of the file is less than the preset threshold, determine a hash value with respect to the file, as the hash value of the file.

In the above embodiment, in determining the hash value of the file through the preset algorithm, the file is applied with a thresholding process. If the size of the file is larger than a preset threshold, several file fragments are extracted from the file, and a hash value is determined with respect to the several file fragments, as the hash value of the file. In this way, calculation workload in determining the hash value of the file may be effectively reduced if the size of the file is too large, and thus the power consumption of the device may be reduced.

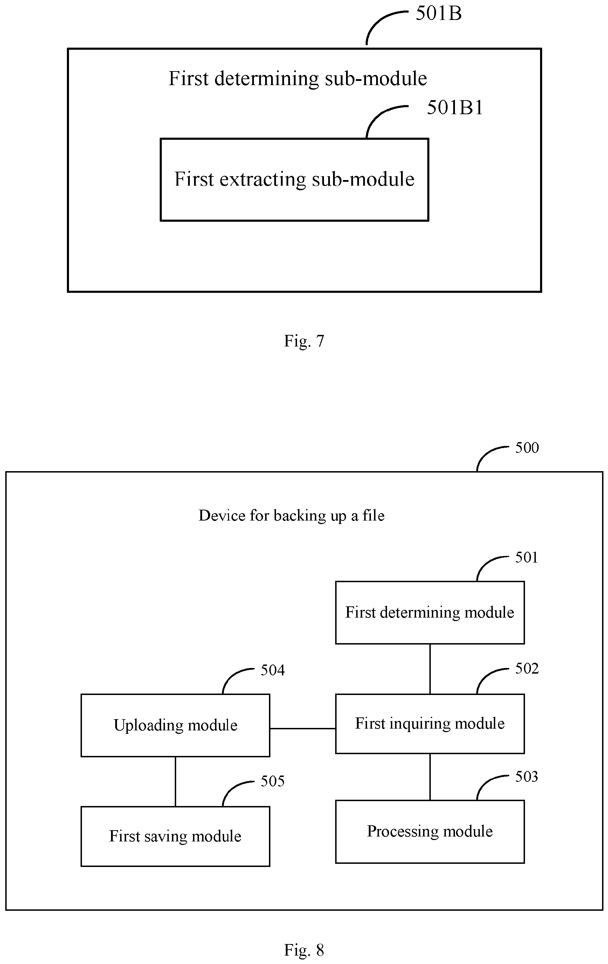

Referring to Fig. 7, Fig. 7 is a block diagram of another device for backing up a file, according to an exemplary embodiment which is based on the above embodiment illustrated in Fig. 6. The first determining sub-module 501B may include a first extracting sub-module 501B1.

The first extracting sub-module 501B1 is configured to evenly extract from the file the several file fragments each having a preset size, wherein a number of bytes occupied by each of the file fragments is less than the preset threshold.

In the above embodiment, by extracting evenly distributed file fragments each having a size less than a preset threshold from the file, a hash value determined with respect to the file fragments and a hash value determined with respect to the file may be as consistent as possible, in addition that the calculation workload in determining a hash value is reduced.

Referring to Fig. 8, Fig. 8 is a block diagram of another device for backing up a file, according to an exemplary embodiment which is based on the above embodiment illustrated in Fig. 5. The device 500 may further include an uploading module 504 and a first saving module 505.
the uploading module 504 is configured to, if it is found out that the hash value is not recorded in the local back-up database, upload the file corresponding to the hash value to the back-up server; and the first saving module 505 is configured to, after the file corresponding to the hash value is uploaded to the back-up server, save the hash value in the local back-up database.

In the above embodiment, after the file corresponding to the hash value is successfully uploaded to the back-up server, the hash value is marked as uploaded in the local back-up database. In this way, whether the file has been uploaded may be learned about by inquiring for the hash value in the local back-up database.

It should be noted that, the uploading module 504 and the first saving module 505 in the above device embodiment illustrated in Fig. 8 may also be included in the above device embodiments illustrated in Figs. 6 and 7, which the present disclosure does not limit.

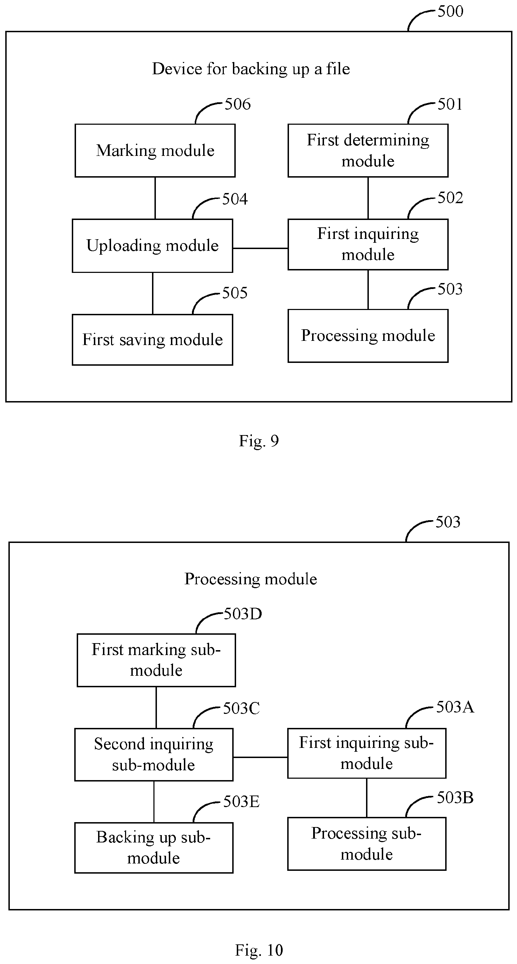

Referring to Fig. 9, Fig. 9 is a block diagram of another device for backing up a file, according to an exemplary embodiment which is based on the above embodiment illustrated in Fig. 8. The device 500 may further include a marking module 506.

The marking module 506 is configured to, after the file corresponding to the hash value is successfully uploaded to the back-up server, mark the hash value as uploaded in the local back-up database.

In the above embodiment, after the file corresponding to the hash value has been successfully uploaded to the back-up server, the hash value in the local back-up database is marked as uploaded. In this way, whether the file has been uploaded may be learned about by inquiring for the hash value in the local back-up database.

It should be noted that, the uploading module 504 and the first saving module 505 in the above device embodiment illustrated in Fig. 9 may also be included in the above device embodiments illustrated in Figs. 6 and 8, which the present disclosure does not limit.

Referring to Fig. 10, Fig. 10 is a block diagram of another device for backing up a file, according to an exemplary embodiment which is based on the above embodiment illustrated in Fig. 5. The processing module 503 may further include a first inquiring sub-module 503A, a processing sub-module 503B, a second inquiring sub-module 503C, a first marking sub-module 503D and a backing up sub-module 503E.

The first inquiring sub-module 503A is configured to, before it is cancelled of backing up the file to the back-up server, inquire for whether the hash value has been marked as uploaded in the local back-up database; the processing sub-module 503B is configured to, if it is found out that the hash value has been marked as uploaded, cancel backing up the file to a back-up server; the second inquiring sub-module 503C is configured to, if it is found out that the hash value has not been marked as uploaded, inquire with the back-up server for whether the file corresponding to the hash value has been successfully uploaded; the first marking sub-module 503D is configured to, if it is found out that the file corresponding to the hash value has been successfully uploaded, mark the hash value as uploaded in the local back-up database, and cancel backing up the file to a back-up server; and the backing up sub-module 503D is configured to, if it is found out that the file corresponding to the hash value has not been successfully uploaded, back up the file to the back-up server.

In the above embodiment, before it is cancelled of backing up the file to the back-up server, it is inquired for whether the hash value has been marked as uploaded in the local back-up database. If it has been marked as uploaded, it is cancelled of backing up the file to the back-up server; and if it has not been marked as uploaded, it is further inquired with the back-up server for whether the file has been successfully uploaded. When it is determined that the file has been successfully uploaded, it is cancelled of backing up the file to the back-up server; and when it is determined that the file has not been successfully uploaded, the file is backed up to the back-up server. In this way, faulty operation due to unsuccessful upload of the file may be avoided.

It should be noted that, the first inquiring sub-module 503A, the processing sub-module 503B, the second inquiring sub-module 503C, the first marking sub-module 503D and the backing up sub-module 503E in the above device embodiment illustrated in Fig. 10 may also be included in the above device embodiments illustrated in Figs. 6 and 9, which the present disclosure does not limit.

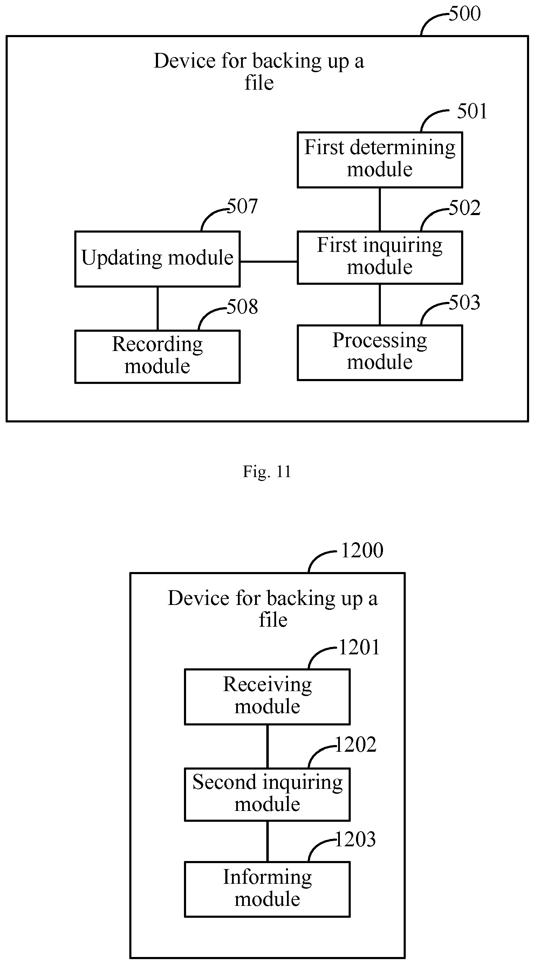

Referring to Fig. 11, Fig. 11 is a block diagram of another device for backing up a file, according to an exemplary embodiment which is based on the above embodiment illustrated in Fig. 5. The device 500 may further include a recording module 508 and an updating module 507.

The recording module 508 is configured to record property information of the file in the local back-up database, wherein the property information contains a latest modification time and a size of the file; and the updating module 507 is configured to, when the property information of the file is different from the property information recorded in the local back-up database, update the hash value and the property information of the file recorded in the local back-up database.

In the above embodiment, property information such as a latest modification time and a size of the file is recorded in the local back-up database, and when the property information of the file is different from the property information recorded in local, the hash value and the property information of the file recorded in the local back-up database are updated. In this way, it may be avoided of a false judgment in backing up a file.

It should be noted that, the recording module 508 and the updating module 507 in the above device embodiment illustrated in Fig. 11 may also be included in the above device embodiments illustrated in Figs. 6 and 10, which the present disclosure does not limit.

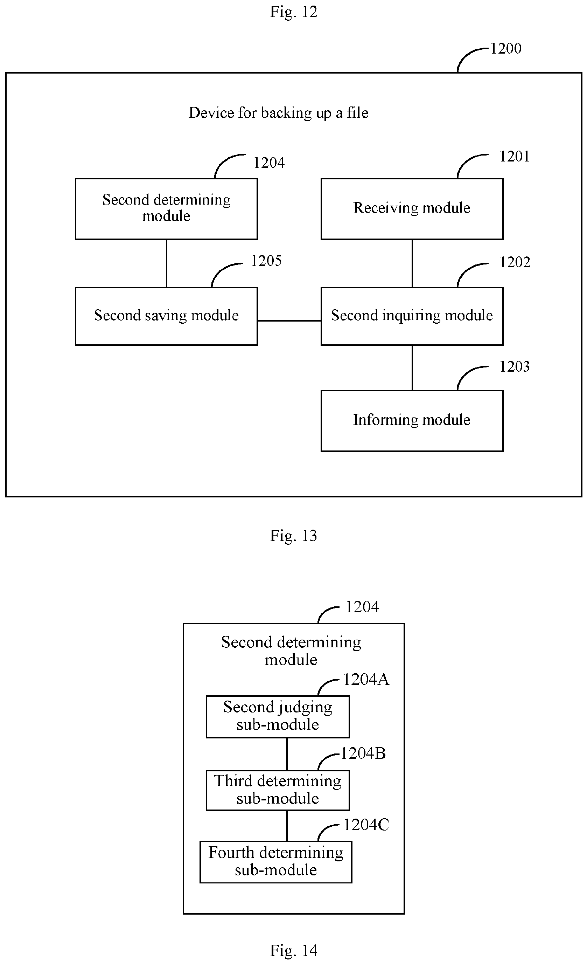

Fig. 12 is a block diagram of another device for backing up a file, according to an exemplary embodiment which may be applied in a back-up server.

Referring to Fig. 12, another device1200 for backing up a file according to an exemplary embodiment is illustrated, including: a receiving module 1201, a second inquiring module 1202 and an informing module 1203.

The receiving module 1201 is configured to receive an inquiring request uploaded from a terminal, wherein the inquiring request carries with a hash value; the second inquiring module 1202 is configured to inquire for the hash value in a local back-up database; and the informing module 1203 is configured to, if it is found out that the hash value has been recorded in the local back-up database, inform the terminal that a file corresponding to the hash value has been successfully uploaded.

In the above embodiment, by inquiring in the local back-up database for the hash value carried in the inquiring request received from the terminal, and informing the terminal that the file corresponding to the hash value has been successfully uploaded if the hash value has been recorded in the local back-up database, it may be avoided of a faulty operation of the terminal caused by unsuccessful upload of the file, that is, repeatedly backing up the same file of different file paths to the back-up server.

Referring to Fig. 13, Fig. 13 is a block diagram of another device for backing up a file, according to an exemplary embodiment which is based on the above embodiment illustrated in Fig. 12. The device 1200 further includes a second determining module 1204 and a second saving module 1205.

The second determining module 1204 is configured to determine the hash value of the file uploaded by the terminal according to a preset algorithm; and the second saving module 1205 is configured to, after the file is backed up successfully in local, save the determined hash value in the local back-up database.

In the above embodiment, the hash value of the uploaded file by the terminal is determined through the preset algorithm, and after the file is successfully backed up in local, the determined hash value is saved in the local back-up database. In this way, when the back-up server searches out the hash value in the local back-up database for another time, the corresponding terminal may be informed that the file corresponding to the hash value has been uploaded.

Referring to Fig. 14, Fig. 14 is a block diagram of another device for backing up a file, according to an exemplary embodiment which is based on the above embodiment illustrated in Fig. 12. The second determining module 1204 includes a second judging sub-module 1204A, a third determining sub-module 1204B and a fourth determining sub-module 1204C.
the second judging sub-module 1204A is configured to judge whether a size of the file is larger than or equal to a preset threshold; the third determining sub-module 1204B is configured to, if it is judged that the size of the file is larger than or equal to the preset threshold, extract several file fragments from the file, and determine a hash value with respect to the several file fragments, as the hash value of the file; and the fourth determining sub-module 1204C is configured to, if it is judged that the size of the file is less than the preset threshold, determine a hash value with respect to the file, as the hash value of the file.

In the above embodiment, in determining the hash value of the file through the preset algorithm, the file is applied with a thresholding process. If the size of the file is larger than a preset threshold, several file fragments are extracted from the file, and a hash value is determined with respect to the several file fragments, as the hash value of the file. In this way, calculation workload in determining the hash value of the file may be effectively reduced if the size of the file is too large, and thus the power consumption of the device may be reduced. Moreover, by extracting evenly distributed file fragments each having a size less than a preset threshold from the file, a hash value determined with respect to the file fragments and a hash value determined with respect to the file may be as consistent as possible, in addition that the calculation workload in determining a hash value is reduced.

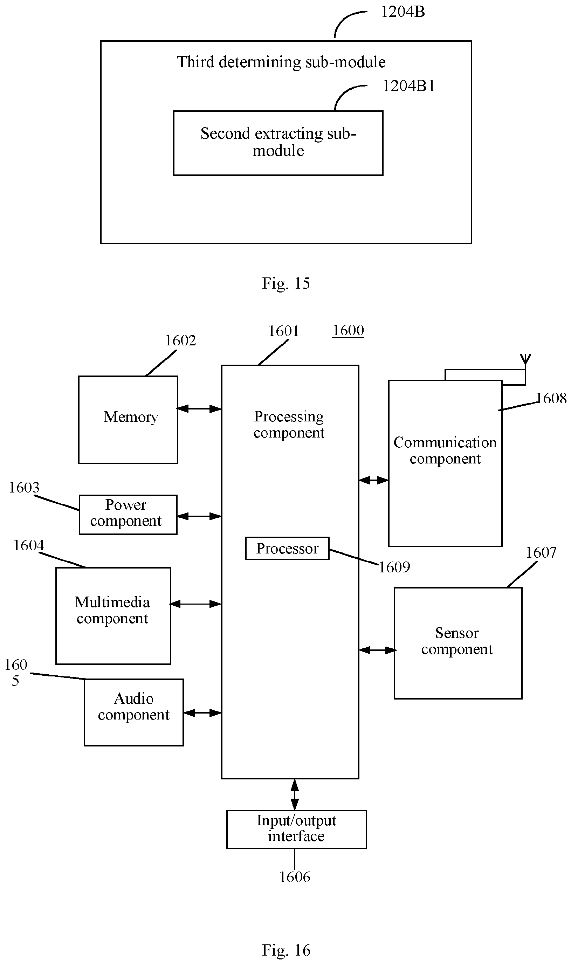

Referring to Fig. 15, Fig. 15 is a block diagram of another device for backing up a file, according to an exemplary embodiment which is based on the above embodiment illustrated in Fig. 14. The third determining sub-module 1204B may include a second extracting sub-module 1204B 1.

The second extracting sub-module 1204B1 is configured to evenly extract from the file the several file fragments each having a preset size, wherein a number of bytes occupied by each of the file fragments is less than the preset threshold.

In the above embodiment, by extracting evenly distributed file fragments each having a size less than a preset threshold from the file, a hash value determined with respect to the file fragments and a hash value determined with respect to the file may be as consistent as possible, in addition that the calculation workload in determining a hash value is reduced.

Correspondingly, the present disclosure further provides a device for backing up a file, including a memory and one or more programs, wherein the one or more programs are stored in the memory, and configured to be executable by one or more processors, wherein the one or more programs includes instructions to cause operations as follows: determining a hash value of the file according to a preset algorithm; inquiring for the determined hash value in a local back-up database; and if it is found out that the hash value has been recorded in the local back-up database, canceling backing up the file to a back-up server.

Fig. 16 is a block diagram of a configuration of a device for backing up a file, according to an exemplary embodiment.

For example, the device 1600 shown in Fig. 16 may be a mobile phone, a computer, a digital broadcast terminal, a messaging device, a gaming console, a tablet, a medical device, exercise equipment, a personal digital assistant, and the like.

Referring to Fig. 16, the device 1600 may include one or more of the following components: a processing component 1601, a memory 1602, a power component 1603, a multimedia component 1604, an audio component 1605, an input/output (I/O) interface 1606, a sensor component 1607, and a communication component 1608.

The processing component 1601 typically controls overall operations of the device 1600, such as the operations associated with display, telephone calls, data communications, camera operations, and recording operations. The processing component 1601 may include one or more processors 1609 to execute instructions to perform all or part of the steps in the above described methods. Moreover, the processing component 1601 may include one or more modules which facilitate the interaction between the processing component 1601 and other components. For instance, the processing component 1601 may include a multimedia module to facilitate the interaction between the multimedia component 1608 and the processing component 1601.

The memory 1602 is configured to store various types of data to support the operation of the device 1600. Examples of such data include instructions for any applications or methods operated on the device 1600, contact data, phonebook data, messages, pictures, video, etc. The memory 1603 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1603 provides power to various components of the device 1600. The power component 1603 may include a power management system, one or more power sources, and any other components associated with the generation, management, and distribution of power in the device 1600.

The multimedia component 1604 includes a screen providing an output interface between the device 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1604 includes a front camera and/or a rear camera. The front camera and the rear camera may receive an external multimedia datum while the device 1600 is in an operation mode, such as a photographing mode or a video mode. Each of the front camera and the rear camera may be a fixed optical lens system or have focus and optical zoom capability.

The audio component 1605 is configured to output and/or input audio signals. For example, the audio component 1605 includes a microphone ("MIC") configured to receive an external audio signal when the device 1600 is in an operation mode, such as a call mode, a recording mode, and a voice recognition mode. The received audio signal may be further stored in the memory 1602 or transmitted via the communication component 1608. In some embodiments, the audio component 1605 further includes a speaker to output audio signals.

The I/O interface 1606 provides an interface between the processing component 1601 and peripheral interface modules, such as a keyboard, a click wheel, buttons, and the like. The buttons may include, but are not limited to, a home button, a volume button, a starting button, and a locking button.

The sensor component 1607 includes one or more sensors to provide status assessments of various aspects of the device 1600. For instance, the sensor component 1607 may detect an open/closed status of the device 1600, relative positioning of components, e.g., the display and the keypad, of the device 1600, a change in position of the device 1600 or a component of the device 1600, a presence or absence of user contact with the device 1600, an orientation or an acceleration/deceleration of the device 1600, and a change in temperature of the device 1600. The sensor component 1607 may include a proximity sensor configured to detect the presence of nearby objects without any physical contact. The sensor component 1607 may further include a light sensor, such as a CMOS or CCD image sensor, for use in imaging applications. In some embodiments, the sensor component 1607 may further include an accelerometer sensor, a gyroscope sensor, a magnetic sensor, a pressure sensor, or a temperature sensor.

The communication component 1608 is configured to facilitate communication, wired or wirelessly, between the device 1600 and other devices. The device 1600 can access a wireless network based on a communication standard, such as WiFi, 2G, or 3G, or a combination thereof. In one exemplary embodiment, the communication component 1608 receives a broadcast signal or broadcast associated information from an external broadcast management system via a broadcast channel. In one exemplary embodiment, the communication component 1608 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there further provides a non-transitory computer-readable storage medium including instructions, such as included in the memory 1602, executable by the processor 1609 in the device 1600, for performing the above-described methods. For example, the non-transitory computer-readable storage medium may be a ROM, a RAM, a CD-ROM, a magnetic tape, a floppy disc, an optical data storage device, and the like.

When instructions in the non-transitory computer readable storage medium are executed by a processor of a terminal, the terminal is enabled to perform a method for backing up a file, wherein the method includes: determining a hash value of the file according to a preset algorithm; inquiring for the determined hash value in a local back-up database; and if it is found out that the hash value has been recorded in the local back-up database, canceling backing up the file to a back-up server.

Correspondingly, the present disclosure further provides another device for backing up a file, including a memory and one or more programs, wherein the one or more programs are stored in the memory, and configured to be executable by one or more processors, wherein the one or more programs includes instructions to cause operations as follows: receiving an inquiring request uploaded from a terminal, wherein the inquiring request carries with a hash value;
inquiring for the hash value in a local back-up database; and if it is found out that the hash value has been recorded in the local back-up database, informing the terminal that a file corresponding to the hash value has been successfully uploaded.

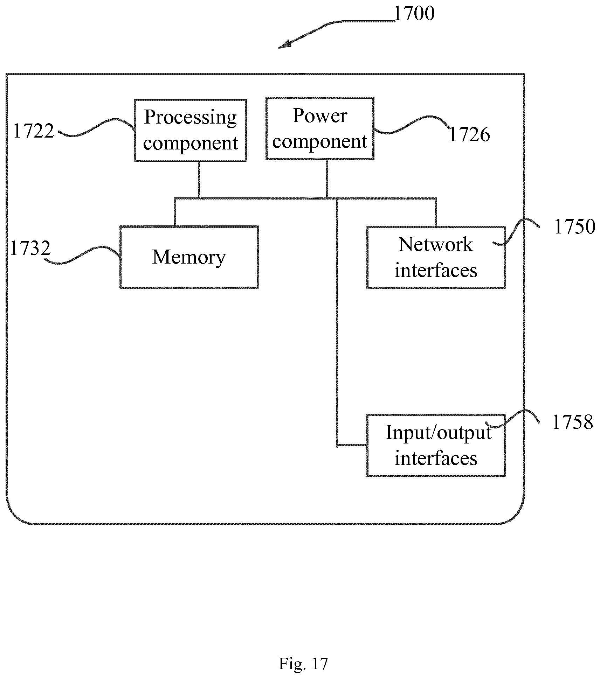

Fig. 17 is another block diagram of a device 1700 for backing up a file, according to an exemplary embodiment. For example, the device 1700 may be provided as a sever. Referring to Fig. 17, the server 1700 includes a processing component 1722, and further includes one or more processors and storage resources represented by a memory 1732 for storing instructions executable by the processing component 1722, such as application programs. The application programs stored in the memory 1732 may include one or more modules each corresponding to a set of instructions. In addition, the processing component 1722 is configured to execute instructions to perform the above method for backing up a file.

The device 1700 may further include: a power component 1726, configured to manage the power of the device 1700; a wired or wireless network interfaces 1750, configured connect the device 1700 to a network; and an input/output (I/O) interfaces 1758. The device 1700 may operate under an operating system stored in the memory 1732, such as Windows ServerTM, Mac OS XTM, UnixTM, LinuxTM, FreeBSDTM, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for backing up a file, the method, applied in a terminal, comprising:
the terminal determining (101) a hash value of the file according to a preset algorithm;
the terminal inquiring (102) for the determined hash value in a local back-up database; and if it is found out that the hash value has been recorded in the local back-up database,
the terminal canceling(103) backing up the file to a back-up server.

2. The method of claim 1, wherein the terminal determining the hash value of the file according to the preset algorithm, comprises:
the terminal judging whether a size of the file is larger than or equal to a preset threshold;
if it is judged that the size of the file is larger than or equal to the preset threshold, extracting several file fragments from the file, and determining a hash value with respect to the several file fragments, as the hash value of the file; and
if it is judged that the size of the file is less than the preset threshold, determining a hash value with respect to the file, as the hash value of the file.

3. The method of claim 2, wherein the extracting the several file fragments from the file, comprises:
evenly extracting from the file the several file fragments each having a preset size,
wherein a number of bytes occupied by each of the file fragments is less than the preset threshold.

4. The method of any of claims 1 to 3, wherein the method further comprises:
if it is found out that the hash value is not recorded in the local back-up database,
the terminal uploading the file corresponding to the hash value to the back-up server; and
after the file corresponding to the hash value is uploaded to the back-up server, saving the hash value in the local back-up database.

5. The method of any preceding claim, wherein the method further comprises:
after the file corresponding to the hash value is successfully uploaded to the back-up server, marking the hash value as uploaded in the local back-up database.

6. The method of any preceding claim, wherein before the terminal canceling backing up the file to a back-up server, the method further comprises:
the terminal inquiring for whether the hash value has been marked as uploaded in the local back-up database;
if it is found out that the hash value has been marked as uploaded, canceling backing up the file to a back-up server;
if it is found out that the hash value has not been marked as uploaded (304), inquiring with the back-up server for whether the file corresponding to the hash value has been successfully uploaded;
if it is found out that the file corresponding to the hash value has been successfully uploaded, marking the hash value as uploaded in the local back-up database, and canceling backing up the file to a back-up server; and
if it is found out that the file corresponding to the hash value has not been successfully uploaded, backing up the file to the back-up server.

7. The method of any preceding claim, wherein the method further comprises:
recording a property information of the file in the local back-up database, wherein the property information contains a latest modification time and a size of the file; and
when the property information of the file is different from the property information recorded in the local back-up database, updating the hash value and the property information of the file recorded in the local back-up database according to the preset algorithm.

8. A method for backing up a file, the method, applied in a back-up server, comprising:
the server receiving (201) an inquiring request uploaded from a terminal, wherein the inquiring request carries a hash value determined according to a preset algorithm;
the server inquiring (202) for the hash value in a local back-up database; and
if it is found out that the hash value has been recorded in the local back-up database, the server informing (203) the terminal that a file corresponding to the hash value has been successfully uploaded.

9. The method of claim 8, wherein the method further comprises:
the server determining (301) the hash value of the file uploaded by the terminal according to the preset algorithm; and
after the file is backed up successfully locally, saving the determined hash value in the local back-up database.

10. The method of claim 9, wherein the server determining the hash value of the file uploaded by the terminal according to the preset algorithm, comprises:
judging whether a size of the file is larger than or equal to a preset threshold;
if it is judged that the size of the file is larger than or equal to the preset threshold, extracting several file fragments from the file, and determining a hash value with respect to the several file fragments, as the hash value of the file; and
if it is judged that the size of the file is less than the preset threshold, determining a hash value with respect to the file, as the hash value of the file.

11. The method of claim 10, wherein the extracting the several file fragments from the file, comprises:
evenly extracting from the file the several file fragments each having a preset size, wherein a number of bytes occupied by each of the file fragments is less than the preset threshold.

12. A terminal for backing up a file, the terminal comprising:
a first determining module (501), configured to determine a hash value of the file according to a preset algorithm;
a first inquiring module (502), configured to inquire for the determined hash value in a local back-up database; and
a processing module (503), configured to, if it is found out that the hash value has been recorded in the local back-up database, cancel backing up the file to a back-up server.

13. A back-up server for backing up a file, the back-up server (1200) comprising:
a receiving module (1201), configured to receive an inquiring request uploaded from a terminal, wherein the inquiring request carries a hash value determined according to a preset algorithm;
a second inquiring module (1202), configured to inquire for the hash value in a local back-up database; and
an informing module (1203), configured to, if it is found out that the hash value has been recorded in the local back-up database, inform the terminal that a file corresponding to the hash value has been successfully uploaded.

14. A device for backing up a file, **characterized in that**, the device comprises:
a processor (1609); and
a memory (1602) for storing instructions executable by the processor,
wherein the processor is configured to perform the method of any of claims 1 to 7, or 8 to 11.

15. A computer program, which when executing on a processor of a device for backing up a file, performs a method according to any one of claims 1 to 7, or 8 to 11.

## Patentansprüche

1. Verfahren zum Sichern einer Datei, wobei das in einem Endgerät angewendete Verfahren Folgendes aufweist:
Bestimmen (101) eines Hashwerts der Datei gemäß einem vorgegebenen Algorithmus durch das Endgerät;
Nachfragen (102) nach dem bestimmten Hashwert in einer lokalen Backup-Datenbank durch das Endgerät und,
wenn festgestellt wird, dass der Hashwert in der lokalen Backup-Datenbank aufgezeichnet wurde, Abbrechen (103) der Sicherung der Datei auf einem Backup-Server durch das Endgerät.

2. Verfahren nach Anspruch 1, wobei das Bestimmen des Hashwerts der Datei gemäß dem vorgegebenen Algorithmus durch das Endgerät Folgendes aufweist:
Beurteilen durch das Endgerät, ob eine Größe der Datei größer oder gleich einem vorgegebenen Schwellenwert ist;
wenn geurteilt wird, dass die Größe der Datei größer oder gleich dem vorgegebenen Schwellenwert ist, Extrahieren mehrerer Dateifragmente aus der Datei und Bestimmen eines Hashwerts in Bezug auf die mehreren Dateifragmente als den Hashwert der Datei und,
wenn geurteilt wird, dass die Größe der Datei kleiner als der vorgegebene Schwellenwert ist, Bestimmen eines Hashwerts in Bezug auf die Datei als den Hashwert der Datei.

3. Verfahren nach Anspruch 2, wobei das Extrahieren der mehreren Dateifragmente aus der Datei Folgendes aufweist:
gleichmäßiges Extrahieren der mehreren Dateifragmente, die jeweils eine vorgegebene Größe haben, aus der Datei, wobei die von jedem der Dateifragmente eingenommene Bytezahl kleiner als der vorgegebene Schwellenwert ist.

4. Verfahren nach einem der Ansprüche 1 bis 3, wobei das Verfahren ferner Folgendes aufweist:
wenn festgestellt wird, dass der Hashwert nicht in der lokalen Backup-Datenbank aufgezeichnet ist, Hochladen der dem Hashwert entsprechenden Datei in den Backupserver durch das Endgerät und,
nachdem die dem Hashwert entsprechende Datei in den Backupserver hochgeladen worden ist, Abspeichern des Hashwerts in der lokalen Backup-Datenbank.

5. Verfahren nach einem der vorhergehenden Ansprüche, wobei das Verfahren ferner Folgendes aufweist:
nachdem die dem Hashwert entsprechende Datei erfolgreich in den Backupserver hochgeladen worden ist, Markieren des Hashwerts in der lokalen Backup-Datenbank als hochgeladen.

6. Verfahren nach einem der vorhergehenden Ansprüche, wobei das Verfahren vor dem Abbrechen der Sicherung der Datei auf einem Backupserver durch das Endgerät ferner Folgendes aufweist:
Nachfragen durch das Endgerät, ob der Hashwert in der lokalen Backup-Datenbank als hochgeladen markiert worden ist;
wenn festgestellt wird, dass der Hashwert als hochgeladen markiert worden ist, Abbrechen der Sicherung der Datei auf einem Backupserver;
wenn festgestellt wird, dass der Hashwert nicht als hochgeladen markiert worden ist (304), Nachfragen beim Backupserver, ob die dem Hashwert entsprechende Datei erfolgreich hochgeladen wurde;
wenn festgestellt wird, dass die dem Hashwert entsprechende Datei erfolgreich hochgeladen wurde, Markieren des Hashwerts in der lokalen Backup-Datenbank als hochgeladen und Abbrechen der Sicherung der Datei auf einem Backupserver; und,
wenn festgestellt wird, dass die dem Hashwert entsprechende Datei nicht erfolgreich hochgeladen wurde, Sichern der Datei auf dem Backupserver.

7. Verfahren nach einem der vorhergehenden Ansprüche, wobei das Verfahren ferner Folgendes aufweist:
Aufzeichnen von Eigenschaftsinformationen der Datei in der lokalen Backup-Datenbank, wobei die Eigenschaftsinformationen einen Zeitpunkt der letzten Änderung und eine Größe der Datei enthalten; und,
wenn die Eigenschaftsinformationen der Datei von den in der lokalen Backup-Datenbank aufgezeichneten Eigenschaftsinformationen verschieden sind, Aktualisieren des Hashwerts und der Eigenschaftsinformationen der Datei, die in der lokalen Backup-Datenbank aufgezeichnet sind, gemäß dem vorgegebenen Algorithmus.

8. Verfahren zum Sichern einer Datei, wobei das in einem Backupserver angewendete Verfahren Folgendes aufweist:
Empfangen (201) einer von einem Endgerät hochgeladenen nachfragenden Anfrage durch den Server, wobei die nachfragende Anfrage einen gemäß einem vorgegebenen Algorithmus bestimmten Hashwert trägt;
Nachfragen (202) nach dem Hashwert in einer lokalen Backup-Datenbank durch den Server und, wenn festgestellt wird, dass der Hashwert in der lokalen Backup-Datenbank aufgezeichnet wurde, Informieren (203) des Endgeräts durch den Server darüber, dass eine dem Hashwert entsprechende Datei erfolgreich hochgeladen wurde.

9. Verfahren nach Anspruch 8, wobei das Verfahren ferner Folgendes aufweist:
Bestimmen (301) des Hashwerts der vom Endgerät hochgeladenen Datei gemäß dem vorgegebenen Algorithmus durch den Server und,
nachdem die Datei erfolgreich lokal gesichert worden ist, Abspeichern des bestimmten Hashwerts in der lokalen Backup-Datenbank.

10. Verfahren nach Anspruch 9, wobei das Bestimmen des Hashwerts der vom Endgerät hochgeladenen Datei gemäß dem vorgegebenen Algorithmus durch den Server Folgendes aufweist:
Beurteilen, ob eine Größe der Datei größer oder gleich einem vorgegebenen Schwellenwert ist;
wenn geurteilt wird, dass die Größe der Datei größer oder gleich dem vorgegebenen Schwellenwert ist, Extrahieren mehrerer Dateifragmente aus der Datei und Bestimmen eines Hashwerts in Bezug auf die mehreren Dateifragmente als den Hashwert der Datei und,
wenn geurteilt wird, dass die Größe der Datei kleiner als der vorgegebene Schwellenwert ist, Bestimmen eines Hashwerts in Bezug auf die Datei als den Hashwert der Datei.

11. Verfahren nach Anspruch 10, wobei das Extrahieren der mehreren Dateifragmente aus der Datei Folgendes aufweist:
gleichmäßiges Extrahieren der mehreren Dateifragmente, die jeweils eine vorgegebene Größe haben, aus der Datei, wobei die von jedem der Dateifragmente eingenommene Bytezahl kleiner als der vorgegebene Schwellenwert ist.

12. Endgerät zum Sichern einer Datei, wobei das Endgerät Folgendes aufweist:
ein erstes Bestimmungsmodul (501), das zum Bestimmen eines Hashwerts der Datei gemäß einem vorgegebenen Algorithmus konfiguriert ist;
ein erstes Nachfragemodul (502), das zum Nachfragen nach dem bestimmten Hashwert in einer lokalen Backup-Datenbank konfiguriert ist; und
ein Verarbeitungsmodul (503), das zum Abbrechen der Sicherung der Datei auf einem Backup-Server, wenn festgestellt wird, dass der Hashwert in der lokalen Backup-Datenbank aufgezeichnet wurde, konfiguriert ist.

13. Backupserver zum Sichern einer Datei, wobei der Backupserver (1200) Folgendes aufweist:
ein Empfangsmodul (1201), das zum Empfangen einer von einem Endgerät hochgeladenen nachfragenden Anfrage konfiguriert ist, wobei die nachfragende Anfrage einen gemäß einem vorgegebenen Algorithmus bestimmten Hashwert trägt;
ein zweites Nachfragemodul (1202), das zum Nachfragen nach dem Hashwert in einer lokalen Backup-Datenbank konfiguriert ist; und
ein Informierungsmodul (1203), das zum Informieren des Endgeräts darüber, dass eine dem Hashwert entsprechende Datei erfolgreich hochgeladen wurde, wenn festgestellt wird, dass der Hashwert in der lokalen Backup-Datenbank aufgezeichnet wurde, konfiguriert ist.

14. Vorrichtung zum Sichern einer Datei, **dadurch gekennzeichnet, dass** die Vorrichtung Folgendes aufweist:
einen Prozessor (1609) und
einen Speicher (1602) zum Speichern von durch den Prozessor ausführbaren Anweisungen,
wobei der Prozessor zum Durchführen des Verfahrens nach einem der Ansprüche 1 bis 7 oder 8 bis 11 konfiguriert ist.

15. Computerprogramm, das bei Ausführung in einem Prozessor einer Vorrichtung zum Sichern einer Datei ein Verfahren nach einem der Ansprüche 1 bis 7 oder 8 bis 11 durchführt.

## Revendications

1. Procédé de sauvegarde d'un fichier, le procédé, appliqué dans un terminal, comprenant :
la détermination (101) par le terminal d'une valeur de hachage du fichier conformément à un algorithme prédéfini ;
l'interrogation (102) par le terminal de la valeur de hachage déterminée dans une base de données de sauvegarde locale ; et
s'il s'avère que la valeur de hachage a été enregistrée dans la base de données de sauvegarde locale, l'annulation (103) par le terminal de la sauvegarde du fichier sur un serveur de sauvegarde.

2. Procédé selon la revendication 1, dans lequel la détermination par le terminal de la valeur de hachage du fichier conformément à l'algorithme prédéfini, comprend :
le jugement par le terminal qu'une taille du fichier est ou non supérieure ou égale à un seuil prédéfini ;
s'il est jugé que la taille du fichier est supérieure ou égale au seuil prédéfini, l'extraction de plusieurs fragments de fichier à partir du fichier, et la détermination d'une valeur de hachage relativement aux plusieurs fragments de fichier, comme valeur de hachage du fichier ; et
s'il est jugé que la taille du fichier est inférieure au seuil prédéfini, la détermination d'une valeur de hachage relativement au fichier, comme valeur de hachage du fichier.

3. Procédé selon la revendication 2, dans lequel l'extraction des plusieurs fragments de fichier à partir du fichier comprend :
l'extraction uniforme à partir du fichier des plusieurs fragments de fichier ayant chacun une taille prédéfinie,
dans lequel un nombre d'octets occupés par chacun des fragments de fichier est inférieur au seuil prédéfini.

4. Procédé selon l'une quelconque des revendications 1 à 3, le procédé comprenant en outre :
s'il s'avère que la valeur de hachage n'est pas enregistrée dans la base de données de sauvegarde locale,
le téléchargement par le terminal du fichier correspondant à la valeur de hachage sur le serveur de sauvegarde ; et
après que le fichier correspondant à la valeur de hachage est téléchargé sur le serveur de sauvegarde, la sauvegarde de la valeur de hachage dans la base de données de sauvegarde locale.

5. Procédé selon l'une quelconque des revendications précédentes, le procédé comprenant en outre :
après que le fichier correspondant à la valeur de hachage est correctement téléchargé sur le serveur de sauvegarde, le marquage de la valeur de hachage comme ayant été téléchargée dans la base de données de sauvegarde locale.

6. Procédé selon l'une quelconque des revendications précédentes, le procédé comprenant en outre, avant l'annulation par le terminal de la sauvegarde du fichier sur un serveur de sauvegarde :
l'interrogation par le terminal que la valeur de hachage a ou non été marquée comme ayant été téléchargée dans la base de données de sauvegarde locale ;
s'il s'avère que la valeur de hachage a été marquée comme ayant été téléchargée, l'annulation de la sauvegarde du fichier sur un serveur de sauvegarde ;
s'il s'avère que la valeur de hachage n'a pas été marquée comme ayant été téléchargée (304), l'interrogation auprès du serveur de sauvegarde que le fichier correspondant à la valeur de hachage a ou non été correctement téléchargée ;
s'il s'avère que le fichier correspondant à la valeur de hachage a été correctement téléchargé, le marquage de la valeur de hachage comme ayant été téléchargée dans la base de données de sauvegarde locale, et l'annulation de la sauvegarde du fichier sur un serveur de sauvegarde ; et
s'il s'avère que le fichier correspondant à la valeur de hachage n'a pas été correctement téléchargé, la sauvegarde du fichier sur le serveur de sauvegarde.

7. Procédé selon l'une quelconque des revendications précédentes, le procédé comprenant en outre :
l'enregistrement d'une information de propriété du fichier dans la base de données de sauvegarde locale, l'information de propriété contenant un temps de dernière modification et une taille du fichier ; et
quand l'information de propriété du fichier est différente de l'information de propriété enregistrée dans la base de données de sauvegarde locale, l'actualisation de la valeur de hachage et de l'informations de propriété du fichier enregistré dans la base de données de sauvegarde locale conformément à l'algorithme prédéfini.

8. Procédé de sauvegarde d'un fichier, le procédé, appliqué dans un serveur de sauvegarde, comprenant :
la réception (201) par le serveur d'une requête d'interrogation téléchargée depuis un terminal, la requête d'interrogation comportant une valeur de hachage déterminée conformément à un algorithme prédéfini ;
l'interrogation (202) par le serveur de la valeur de hachage dans une base de données de sauvegarde locale ; et
s'il s'avère que la valeur de hachage a été enregistrée dans la base de données de sauvegarde locale, l'information (203) par le serveur au terminal qu'un fichier correspondant à la valeur de hachage a été correctement téléchargé.

9. Procédé selon la revendication 8, le procédé comprenant en outre :
la détermination (301) par le serveur de la valeur de hachage du fichier téléchargé par le terminal conformément à l'algorithme prédéfini ; et
après que le fichier est sauvegardé correctement localement, la sauvegarde de la valeur de hachage déterminée dans la base de données de sauvegarde locale.

10. Procédé selon la revendication 9, dans lequel la détermination par le serveur de la valeur de hachage du fichier téléchargé par le terminal conformément à l'algorithme prédéfini comprend :
le jugement qu'une taille du fichier est ou non supérieure ou égale à un seuil prédéfini ;
s'il est jugé que la taille du fichier est supérieure ou égale au seuil prédéfini, l'extraction de plusieurs fragments de fichier à partir du fichier, et la détermination d'une valeur de hachage relativement aux plusieurs fragments de fichier, comme valeur de hachage du fichier ; et
s'il est jugé que la taille du fichier est inférieure au seuil prédéfini, la détermination d'une valeur de hachage relativement au fichier, comme valeur de hachage du fichier.

11. Procédé selon la revendication 10, dans lequel l'extraction des plusieurs fragments de fichier à partir du fichier comprend :
l'extraction uniforme à partir du fichier des plusieurs fragments de fichier ayant chacun une taille prédéfinie,
dans lequel un nombre d'octets occupés par chacun des fragments de fichier est inférieur au seuil prédéfini.

12. Terminal de sauvegarde d'un fichier, le terminal comprenant :
un premier module de détermination (501), configuré pour déterminer une valeur de hachage du fichier conformément à un algorithme prédéfini ;
un premier module d'interrogation (502) configuré pour interroger la valeur de hachage déterminée dans une base de données de sauvegarde locale; et
un module de traitement (503), configuré pour, s'il s'avère que la valeur de hachage a été enregistrée dans la base de données de sauvegarde locale, annuler la sauvegarde du fichier sur un serveur de sauvegarde.

13. Serveur de sauvegarde destiné à sauvegarder un fichier, le serveur de sauvegarde (1200) comprenant :
un module de réception (1201), configuré pour recevoir une requête d'interrogation téléchargée depuis un terminal, la requête d'interrogation comportant une valeur de hachage déterminée conformément à un algorithme prédéfini ;
un second module d'interrogation (1202), configuré pour interroger la valeur de hachage dans une base de données de sauvegarde locale ; et
un module d'information (1203), configuré pour, s'il s'avère que la valeur de hachage a été enregistrée dans la base de données de sauvegarde locale, informer le terminal qu'un fichier correspondant à la valeur de hachage a été correctement téléchargé.

14. Dispositif de sauvegarde d'un fichier, **caractérisé en ce que** le dispositif comprend :
un processeur (1609) ; et
une mémoire (1602) pour mémoriser des instructions exécutables par le processeur, dans lequel le processeur est configuré pour exécuter le procédé selon l'une quelconque des revendications 1 à 7, ou 8 à 11.

15. Programme informatique, qui, à son exécution sur un processeur d'un dispositif de sauvegarde de fichier, exécute un procédé selon l'une quelconque des revendications 1 à 7, ou 8 à 11.
